# EUROPÄISCHE PATENTSCHRIFT

(11) **EP 3 331 764 B1**
(45) Veröffentlichungstag und Bekanntmachung des Hinweises auf die Patenterteilung: **29.09.2021**
(21) Anmeldenummer: 16750435.6
(22) Anmeldetag: 08.08.2016
(51) Int. Cl.: B65B 31/02, B65B 51/10, B65B 9/04, B29C 65/00, B65B 59/00, B65B 57/00, B65B 57/18, B65B 25/06, B65B 47/10, B65B 47/02, B65B 51/14, B29C 65/18, B29C 51/46, G05B 19/042

(54) **VERPACKUNGSMASCHINE MIT VERBESSERTER EINSTELLFUNKTION**
PACKAGING MACHINE HAVING AN IMPROVED ADJUSTMENT FUNCTION
MACHINE D'EMBALLAGE À FONCTION DE RÉGLAGE AMÉLIORÉ

(30) Priorität: 06.08.2015 DE 102015214992
(43) Veröffentlichungstag der Anmeldung: 13.06.2018
(73) Patentinhaber: MULTIVAC Sepp Haggenmüller SE & Co. KG, 87787 Wolfertschwenden (DE)
(72) Erfinder: EHRMANN, Elmar, 87730 Bad Grönenbach (DE); BOTZENHARDT, Claus, 87439 Kempten (DE); LAU, Christian, 88178 Heimenkirch (DE); SCHMID, Natalie, 87527 Sonthofen (DE); FELCH, Florian, 87471 Durach (DE); REMMELE, Thorsten, 87784 Westernheim (DE)
(74) Vertreter: Grünecker Patent- und Rechtsanwälte PartG mbB
(86) Internationale Anmeldenummer: PCT/EP2016/068896
(87) Internationale Veröffentlichungsnummer: WO 2017/021556

(56) Entgegenhaltungen:
- EP-A1- 1 225 491
- EP-A1- 2 252 921
- DE-A1-102005 059 312
- DE-A1-102006 050 417
- DE-A1-102008 024 461
- DE-A1-102012 004 341
- DE-A1-102012 005 179
- JP-A- H04 138 504

## Beschreibung

Die vorliegende Erfindung betrifft eine Vorrichtung gemäß dem Anspruch 1. Weiterhin bezieht sich die vorliegende Erfindung auf ein Verfahren gemäß dem Anspruch 13.

In der Praxis werden Verpackungsmaschinen vor dem eigentlichen damit durchgeführten Herstellungsprozess, d.h. bevor damit spezifische Produkte auftragsgemäß verpackt werden können, oftmals mittels großem Aufwand während eines vorab durchgeführten Einstellvorgangs mit einer Vielzahl von produkt- und maschinenabhängigen Prozessdaten vorprogrammiert. Dabei sind oft mehrere Probeläufe notwendig, um optimale Prozessdaten herauszufinden. Den Einstellvorgang können wegen der Vielzahl benötigter Prozessdaten meist nur geschulte Maschineneinsteller an der Verpackungsmaschine durchführen.

Insbesondere, wenn zum ersten Mal ein neues Produkt, eine neue Folie oder ein neues Werkzeug an der Verpackungsmaschine eingesetzt wird, existiert dafür noch kein Programm (Rezept) mit geeigneten Maschineneinstellungen (Parametern). Es ist für die Bediener oft unmöglich und selbst für einen Maschineneinsteller mit hohem Aufwand verbunden, ein Programm an der Verpackungsmaschine für das neue Produkt, das neue Verpackungsmaterial und/oder das dafür neu eingesetzte Werkzeug herzustellen, sodass entsprechend geänderter Rahmenbedingungen eine prozesssichere Produktion beginnen kann.

DE 10 2012 005 179 A1 offenbart eine Vorrichtung sowie ein Verfahren zum Betreiben der Vorrichtung für einen Formprozess einer erwärmten thermoplastischen Kunststofffolie. Dabei führt eine Steuerung der Vorrichtung Maschineneinstellungen, die einen Thermoformprozess steuern, einem Regler als erste Eingangsgrößen zu, ermittelt aus dem Thermoformprozess Messgrößen und führt die Messgrößen dem Regler als zweite Eingangsgrößen zu und der Bediener führt als dritte Eingangsgrößen Eingaben über die Bedienereingabeschnittstelle HMI dem Regler zu, wobei der Regler die ersten, zweiten und dritten Eingangsgrößen verarbeitet und die Regelergebnisse der Steuerung als angepasste Maschineneinstellungen zuführt.

EP 2 252 921 A1 offenbart eine maschinell gestützte Iteration zum Optimieren von Betriebsparametern für den Betrieb einer kunststoffverarbeitenden Anlage.

Aufgabe der Erfindung ist es, eine Verpackungsmaschine mit verbesserter Einstellfunktion sowie ein Verfahren dafür zur Verfügung zu stellen. Aufgabe ist es insbesondere auch, dem Bedienpersonal den Weg hin zum fertigen Programm bei der ersten Einstellung der Verpackungsmaschine zu erleichtern.

Diese Aufgabe wird gelöst durch eine Verpackungsmaschine gemäß dem Anspruch 1 bzw. durch ein Verfahren gemäß dem Anspruch 13. Verbesserte Weiterbildungen der Erfindung sind Gegenstand der Unteransprüche.

Die erfindungsgemäße Vorrichtung umfasst eine Verpackungsmaschine, die eine Steuereinheit mit einem Prozessparametergenerator aufweist, der dazu ausgebildet ist, für einen Herstellungsvorgang der Verpackungsmaschine spezifische Prozessparameter zu bestimmen. Erfindungsgemäß umfasst die Steuereinheit der Verpackungsmaschine ferner einen Rezeptgenerator für einen dem Herstellungsvorgang vorangehenden Einstellvorgang der Verpackungsmaschine oder ist mit einem als separate Einheit ausgebildeten Rezeptgenerator der Vorrichtung verbindbar, wobei der jeweilige Rezeptgenerator ein Regelwerk zur Bestimmung von Rezeptvariablen für den Einstellvorgang der Verpackungsmaschine umfasst. Ferner ist der Rezeptgenerator dazu ausgebildet, anhand einer Vielzahl an Informationen, einschließlich Informationen bezüglich eines herzustellenden Produkts, eines Verpackungstyps dafür, mindestens eines eingesetzten Werkzeugs der Verpackungsmaschine, eines aufzubringenden Etiketts und/oder eines Folienmaterials die Rezeptvariablen zu erzeugen und daraus einen Rezeptdatensatz für den Einstellvorgang der Verpackungsmaschine zu bilden. Weiter erfindungsgemäß ist der Prozessparametergenerator dazu ausgebildet, die Steuereinheit für den Herstellungsvorgang der Verpackungsmaschine mit spezifischen Prozessparametern vorzubelegen, die zumindest teilweise auf den jeweiligen für den Einstellvorgang erzeugten Rezeptvariablen des Rezeptdatensatzes basieren. Die Erfindung bietet u.A. den Vorteil, dass Umrüstzeiten der Maschine reduziert werden können.

Bei der Erfindung kann der Rezeptgenerator als autonomer Bestandteil der Steuereinheit oder als separat ausgeführtes autonomes Modul, d.h. als körperlich eigenständige Einheit zur funktionalen Verbindung mit der Steuereinheit ausgeführt sein. Bei letzterer Ausführung ist der Rezeptgenerator vorzugsweise mittels einer webbasierten Anwendung funktional mit der Steuereinheit verbindbar.

Der Rezeptdatensatz kann insbesondere universell ein in der Hinsicht, für viele technisch unterschiedlich ausgestattete Maschinen verwendbar zu sein. Nach Übernahme des Rezeptdatensatzes kann die einzelne Maschine mittels des Prozessgenerators individuell darauf angepasst werden.

Bei beiden Varianten kommt der Rezeptgenerator primär bei dem Einstellvorgang der Verpackungsmaschine zum Einsatz, d.h. zeitlich gesehen vor dem eigentlichen Herstellungsprozess. Ziel des Einstellungsvorgangs ist eine optimale Vorbelegung der Steuereinheit mit Prozessparametern, d.h. eine optimale Parametrierung der Steuereinheit durchzuführen.

Bei der Erfindung können aus einfach zugänglichen Informationen fachmännische, vorzugsweise um ein Vielfaches ergänzte Rezeptvariablen mittels des Rezeptgenerators unter Verwendung des darauf aufgespielten Regelwerks generiert werden, die als Eingangsgrößen dem Prozessparametergenerator zugeführt werden können, welcher daraus spezifische Prozessparameter erzeugt. Diese können zur Vorbelegung der Steuereinheit, d.h. insbesondere als sollwertige Führungsgrößen von der Steuereinheit in einem vorzugsweise prozessdatenbasierten Regelkreis beim Herstellungsvorgang benutzt werden.

Die Rezeptvariablen können vorzugsweise anhand eines im Rezeptgenerator vorprogrammierten, aus Expertenwissen gebildeten Regelwerks bestimmt werden. Das Regelwerk umfasst vorzugsweise mathematische Formeln und/oder Datensätze, anhand welcher für den Herstellungsvorgang benötigte Rezeptvariablen bestimmbar sind. Vorzugsweise sind die jeweiligen Formeln des Regelwerks zur verkürzten Bezeichnung eines mathematischen, physikalischen und/oder chemischen Sachverhalts, Zusammenhangs oder Regel für den anvisierten Herstellungsvorgang ausgebildet.

Der Rezeptgenerator kann als intelligente Einstellhilfe beim Einstellvorgang verwendet werden, weil das bereits auf ihm vorprogrammierte Regelwerk eine Vielzahl von Rezeptvariablen bestimmen kann, die ohne den Rezeptgenerator ansonsten einzeln manuell vom Mascheneinsteller zum Aufbau eines Programms für den Herstellungsvorgang in die Steuerung der Verpackungsmaschine eingegeben werden müssten.

Nachdem durch den Rezeptgenerator die Rezeptvariablen hergestellt sind, können diese in einem beliebigen Zeitrahmen danach, dann aber prozessnah vom Prozessparametergenerator zur Herstellung der Prozessparameter verwendet werden, anhand welcher die Steuereinheit für den Herstellungsvorgang vorbelegt werden kann.

Die Erfindung bietet primär Vorteile für den Einstellvorgang der Verpackungsmaschine, welcher zeitlich vor dem eigentlichen Herstellungsvorgang abläuft. Die Hauptfunktion des Rezeptgenerators für den Einstellvorgang bestimmt, d.h., dass dessen Einsatz zur Berechnung der Rezeptvariablen unabhängig von einer, obwohl auf den Rezeptvariablen basierenden, mittels der Steuereinheit vorzugsweise prozessdatenbasierten Steuerung des eigentlichen Herstellungsprozesses ist. Erfindungsgemäß ist die Herstellung der Rezeptvariablen mittels des Rezeptgenerators, ohne in einen prozessnahen Regelkreis des Herstellungsvorgangs eingebunden zu sein, isoliert, d.h. autonom als Schritt im Rahmen der Arbeitsvorbereitung des Einstellvorgangs ablaufen.

In anderen Worten ist der Rezeptgenerator dazu ausgelegt, vorab während des Einstellvorgangs aus ihm zugespielten leicht erhältlichen Informationen eine allgemeine Rezeptur aus Rezeptvariablen zu erzeugen, die zeitlich ungebunden dem Prozessparametergenerator zur Erzeugung von Prozessparametern zur Vorbelegung der Steuereinheit zur Verfügung stehen.

Vorzugsweise ist der als separate Einheit ausgebildete Rezeptgenerator in einem Server- oder Cloud-System funktional integriert und für den Einstellvorgang mit der Steuereinheit, insbesondere mit dem Prozessparametergenerator der Steuereinheit der Verpackungsmaschine verbindbar.

Vorteilhaft ist auch, wenn der als separate Einheit ausgebildete Rezeptgenerator Zugriff auf eine externe Datenbank hat, welche das Server- oder Cloud-System umfasst, d.h. vorzugsweise webbasiert im Server- oder Cloud-System integriert ist.

Vorzugsweise umfasst die Steuereinheit der Verpackungsmaschine selbst eine Datenbank zur Bereitstellung, Berechnung und/oder Ergänzung der Informationen für den Rezeptgenerator. Vorzugsweise umfasst die Datenbank mehrere Partitionen, insbesondere eine Produktdatenbank, eine Verpackungstypendatenbank, eine Verpackungsmaterialdatenbank, eine Werkzeugdatenbank und/oder eine Etikettendatenbank, wobei die jeweiligen Partitionen dazu ausgebildet sind, aus den als Eingangsgrößen abgerufenen Informationen zusätzliche Information zu erzeugen und/oder direkt an den Rezeptgenerator weiterzuleiten. Vorzugsweise umfasst die Verpackungsmaschine eine HMI-Schnittstelle, woran die Informationen durch einen Bediener direkt für den Rezeptgenerator und/oder für den Datenbankabgleich aufrufbar und/oder eingebbar sind. Gemäß einer Ausführungsform bietet die HMI-Schnittstelle der Verpackungsmaschine eine Korrekturfunktion, anhand welcher durch den Bediener einzelne Rezeptvariablen und/oder Prozessparameter korrigierbar und/oder ergänzbar sind.

Vorzugsweise umfasst die Verpackungsmaschine eine Lesevorrichtung, die als RFID-Scanner ausgebildet ist, der dazu konfiguriert ist, die Informationen zur Generierung der Rezeptvariablen aus einem am Produkt, am Verpackungsmaterial, am Werkzeug, am Etikett und/oder am Folienmaterial angebrachten RFID-Chip auszulesen und an den Rezeptgenerator weiterzuleiten.

Vorzugsweise kann eine Information bezüglich des Produkts eine Artikelnummer, ein Produktname, ein Produkttyp und/oder ein am Produkt durchgeführter Funktionsvorgang, insbesondere ein Verpackungsverfahren sein. Beispielsweise möchte der Bediener ein feuchtes Produkt mit Atmosphärenaustausch (MAP) verpacken, z.B. Fleischwurst. Mittels Eingabe einer Einlegetemperatur und mittels gegebenenfalls zusätzlicher Informationen aus einer mit dem Rezeptgenerator verbundenen Datenbank, insbesondere der Produktdatenbank, kann der Rezeptgenerator einen Wertvorschlag für ein maximales Produktvakuum generieren, welches aus einer für das Produkt speziell auf der Datenbank hinterlegten Dampfdruckkurve und dem aus Expertenwissen auf dem Rezeptgenerator voreingestellten Regelwerk berechenbar ist.

Es können beispielsweise von einem Bediener für den Einstellvorgang spezielle Produkte ausgewählt werden, die bezüglich ihrer besonderen Eigenschaften Sonder-Verfahren benötigen. So gibt es beispielsweise für Fleisch- oder Käsewaren mit Lufteinschlüssen (z.B. Leberkäse und Tilsiter) spezielle Prozessabläufe (z.B. ein "Leberkäse"- und/oder "Tilsiter"-Programm), die eine Beschädigung des Produkts während des Evakuierungsprozesses verhindern. Beispielsweise können durch bloße Auswahl eines solchen Produkts diesbezügliche Produkteigenschaften dem Rezeptgenerator aus der Produktdatenbank zur Verfügung gestellt werden, damit dieser als Rezeptvariablen ein stufenweises Evakuieren und/oder langsames/sanftes Evakuieren für den Rezeptdatensatz bestimmt, damit die Lufteinschlüsse langsam aus dem Produkt diffundieren können.

Beispielsweise könnte eine Information bezüglich der Verpackung eine Eingabe von Verpackungsabmessungen sein, wodurch mittels des Rezeptgenerators ein Umformgrat der Folie ermittelt werden könnte und damit eine theoretische Restfoliendicke. Diesbezüglich kann der Rezeptgenerator eine Regel für die Generierung einer minimalen Abkühlzeit umfassen, wobei diese die Bedingung erfüllt, dass je größer die Oberfläche und je geringer die Restfoliendicke ist, desto schneller kann die thermische Energie in das Formwerkzeugunterteil abfließen, d.h. desto geringer ist die minimale Abkühlzeit.

Es könnte beispielsweise von einem Kunden für einen verbesserten Produkt-Öffnungsvorgang beim Verbraucher eine leicht konvex gewölbte Verpackung gewünscht sein, was vorzugsweise als allgemeine, auf den Verpackungstypen bezogene Information als Eingangsgröße für den Rezeptgenerator und/oder die Verpackungstypendatenbank auswählbar ist, aus welcher dem Rezeptgenerator entsprechend der allgemeinen Information eine damit verknüpfte Prozessgröße als Information zur Erzeugung der Rezeptvariablen weiterleitbar ist. Der Bediener könnte den gewölbten Verpackungstypenwunsch insbesondere an der HMI-Schnittstelle der Verpackungsmaschine auswählen. Basierend auf dieser Information kann der Rezeptgenerator Rezeptvariablen für eine Anwendung einer geregelten Begasung zur Herstellung eines gewünschten Rückbegasungsdrucks, der über dem Atmosphärendruck liegt, für den Herstellungsvorgang erzeugen.

Beispielsweise könnte eine Information bezüglich des verwendeten Folienmaterials durch manuelle Eingabe oder automatisches Einlesen (z.B. über RFID oder Barcode) des Folientyps (Materialart, Foliendicke und/oder Hersteller) unter Einbezug der hinterlegten Foliendatenbank ein Heiztemperaturfenster vom Rezeptgenerator vorgeschlagen werden. Dieses Heiztemperaturfenster kann zusätzlich noch durch das auf Expertenwissen basierende Regelwerk des Rezeptgenerators, vorzugsweise hinsichtlich eines speziellen Heizverfahrens und/oder spezieller Regeln für einen maximalen Energieeintrag, angepasst werden.

Es könnte beispielsweise eine Unterfolie mit 300 Mikrometern zum Einsatz kommen, sodass bei einem "Standardformverfahren" unter Einbeziehung der Regel von 0,6 Sekunden pro 100 Mikrometer eine Heizzeit von 1,8 Sekunden resultiert und bei einfacher "Sandwichvorheizung" unter Einbeziehung der Regel von 0,4 Sekunden pro 100 Mikrometern eine Heizzeit von 1,2 Sekunden vom Rezeptgenerator vorgeschlagen wird.

Beispielsweise könnte aus einer Information bezüglich eines an der Verpackungsmaschine verwendeten Siegelwerkzeugs, vorzugsweise anhand gespeicherter Werkzeugdaten, beispielsweise anhand auslesbarer Informationen eines daran angebrachten RFID-Tags, eines mechatronischen Werkzeugs und/oder abrufbarer Informationen aus der Werkzeugdatenbank, sowohl eine effektive Membranfläche des verwendeten Siegelwerkzeugs als auch dessen Siegelnahtfläche mittels des Rezeptgenerators bestimmt werden. Zusammen mit einer (mittels einer Foliendatenbank) vorgegebenen Siegel-Flächenkraft kann die eine Siegelkraft erzeugende Membrane entsprechend mit Druckluft beaufschlagt werden.

Beispielsweise könnte eine Information bezüglich des Etiketts derart ausgewählt werden, dass der Bediener vorzugsweise in einer grafischen Oberfläche der HMI-Schnittstelle das Etikett mit Aufdruck bestimmt sowie festlegt, wie das Etikett auf der Verpackung platziert werden soll. Der Rezeptgenerator könnte dann unterschiedliche Bereiche und Ausprägungen anbieten, entsprechend welcher ein zur Vorrichtung gehöriger Etikettierer ansteuerbar ist.

Eine vorteilhafte Variante sieht vor, dass die Steuereinheit der Verpackungsmaschine einen Rezeptspeicher umfasst, auf welchem mehrere für den Einstellvorgang generierte Rezeptdatensätze ablegbar sind und folgenden Einstellvorgängen zur Verfügung stehen.

Vorzugsweise ist das Regelwerk des Rezeptgenerators funktional änderbar und/oder erweiterbar. Bevorzugterweise ist das Regelwerk per Update-Funktion bezüglich neuer Expertenkenntnisse aktualisierbar.

Vorzugsweise ist die Verpackungsmaschine eine Tiefziehverpackungsmaschine, die eine Formstation umfasst, und der Rezeptgenerator verfügt über eine Regel zur Bestimmung einer Heizzeit als Rezeptvariable zum Vorheizen einer für den Herstellungsvorgang verwendeten Unterfolie, wobei der Rezeptgenerator unter Verwendung der Regel dazu ausgebildet ist, die Heizzeit anhand der Information betreffend eine Foliendicke der Unterfolie zu bestimmen. Beispielsweise ist die Regel zur Bestimmung der Heizzeit, dass diese pro 100 Mikrometer ein vorgegebenes Vielfaches (eines Bruchteils) einer Sekunde, insbesondere 0,5 Sekunden pro 100 Mikrometer entspricht.

Eine vorteilhafte Variante sieht vor, dass der Rezeptgenerator über eine Regel zur Bestimmung einer Formzeit als Rezeptvariable zum Formen der Unterfolie verfügt, wobei der Rezeptgenerator unter Verwendung der Regel dazu ausgebildet ist, die Formzeit als Bruchteil der Heizzeit zu bestimmen, insbesondere als ein Drittel der Heizzeit.

Vornehmlich umfasst die Verpackungsmaschine eine Siegelstation und der Rezeptgenerator eine Regel zur Bestimmung einer Siegeltemperatur als Rezeptvariable zum Herstellen einer Siegelnaht, wobei der Rezeptgenerator unter Verwendung der Regel dazu ausgebildet ist, die Siegeltemperatur basierend auf einer summierten Foliendicke zu versiegelnder Folienabschnitte zu bestimmen.

Vorzugsweise umfasst der Rezeptgenerator eine Regel zur Bestimmung einer Siegelkraft als Rezeptvariable zum Herstellen der Siegelnaht, wobei der Rezeptgenerator unter Verwendung der Regel dazu ausgebildet ist, die Siegelkraft als Produkt aus einem an der Siegelstation aufbringbaren Siegeldruck und einer zu erzeugenden Siegelfläche zu berechnen.

Für einen flexiblen Betrieb ist der Prozessparametergenerator erfindungsgemäß dazu ausgebildet, die Prozessparameter mittels eines im Prozessparametergenerator ausgebildeten Regelwerks in Abhängigkeit von an der Verpackungsmaschine eingesetzten Werkzeugkomponenten anzupassen.

Die Erfindung betrifft auch ein Verfahren zur Generierung eines Rezeptdatensatzes für einen Einstellvorgang einer Verpackungsmaschine, wobei ein Rezeptgenerator der Verpackungsmaschine oder ein als separate Einheit ausgebildeter und mit der Verpackungsmaschine funktional verbindbarer Rezeptgenerator mittels eines Regelwerks aus einer Vielzahl an Informationen, einschließlich Informationen bezüglich eines herzustellenden Produkts, eines Verpackungstyps dafür, mindestens eines eingesetzten Werkzeugs der Verpackungsmaschine, eines aufzubringenden Etiketts und/oder eines Folienmaterials eine Vielzahl von Rezeptvariablen des Rezeptdatensatzes für den Einstellvorgang der Verpackungsmaschine erzeugt. Ferner erzeugt ein Prozessparametergenerator der Verpackungsmaschine aus dem Rezeptdatensatz spezifische Prozessparameter, die zumindest teilweise zur Vorbelegung einer Steuereinheit für einen Herstellungsvorgang an der Verpackungsmaschine verwendet werden, wobei die Herstellung der Rezeptvariablen mittels des Rezeptgenrators ohne in einen prozessnahen Regelkreis des Herstellungsvorgangs eingebunden zu sein, autonom abläuft.

Erfindungsgemäß berechnet der Prozessparametergenerator mit einem im Prozessparametergenerator ausgebildeten Regelwerk in Abhängigkeit mindestens einer Rezeptvariablen des Rezeptdatensatzes und mindestens einer speziellen Größe einer an der Verpackungsmaschine eingesetzten Werkzeugkomponente einen speziellen Prozessparameter zur Vorbelegung der Steuereinheit.

Ausführungsformen der Erfindung werden anhand der nachfolgend beschriebenen Figuren erläutert. Es zeigen:
- Fig. 1: eine schematische Darstellung der Erfindung und
- Fig. 2: eine Tiefziehverpackungsmaschine gemäß einer Ausführungsform der Erfindung.

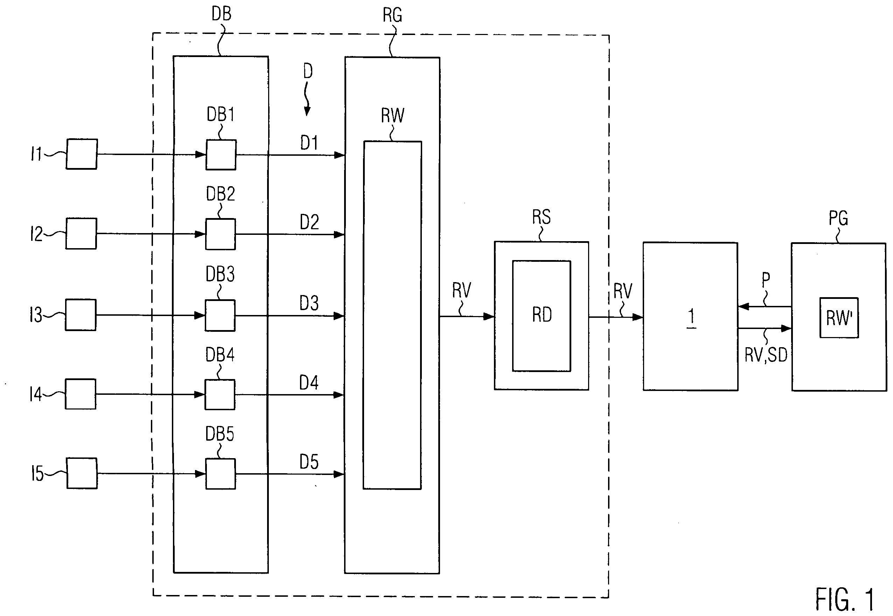

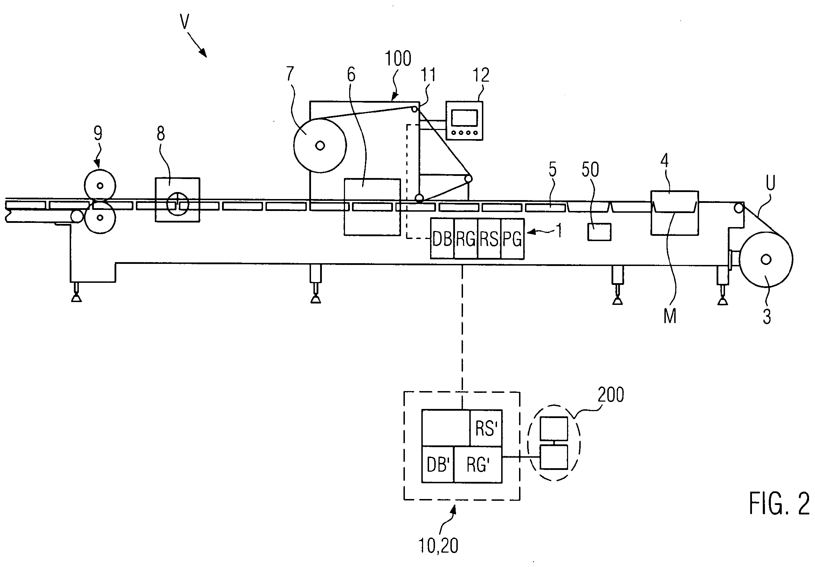

Figur 1 zeigt in schematischer Darstellung ein Funktionsschaubild für einen Einstellvorgang E einer in Figur 2 gezeigten Verpackungsmaschine 100.

Im Einstellvorgang E werden zunächst Informationen I, insbesondere Produktinformationen I1, Verpackungstypinformationen I2, Verpackungsmaterialinformationen I3, Werkzeuginformationen I4 und Etiketteninformationen I5 mittels einer RFID- oder HMI-Anwendung oder als Informationen von einem mechatronischen Werkzeug an der Verpackungsmaschine 100 aufgerufen. Die Informationen I könnten auch an mindestens einem von der Verpackungsmaschine 100 entfernten PC 200 (siehe Figur 2) aufgerufen werden.

Durch die Auswahl der Informationen I findet ein diesbezüglicher Zugriff auf eine Datenbank DB, insbesondere auf entsprechende zur Datenbank DB gehörige Datenbankpartitionen DB1, DB2, DB3, DB4 und DB5 statt. Die jeweiligen Datenbankpartitionen DB1, DB2, DB3, DB4 und DB5 sind dazu ausgebildet, anhand der ausgewählten Informationen I1, I2, I3, I4 und I5 entsprechende und/oder ergänzende Daten und/oder daraus berechnete Daten an einen Rezeptgenerator RG als Eingangsgrößen zu senden. Der Rezeptgenerator RG kann als Teil in einer zur Verpackungsmaschine 100 gehörigen Steuereinheit 1, auf einem Serversystem 10 und/oder in einem Cloud-System 20 ausgebildet sein.

Die Datenbank DB kann als Teil des Rezeptgenerators RG, insbesondere in dem Server- oder Cloud-System 10, 20 und/oder in der Steuereinheit 1, ausgebildet sein. In der Datenbank DB sind eine Vielzahl von Rohdaten sowie Datensätze D enthalten, die entsprechend des Info-Inputs aktivierbar sind. Die Datenbank DB verknüpft dabei die Information I mit dazugehörigen Daten D1, D2, D3, D4, D5, die entsprechend der eingegangen Informationen I1, I2, I3, I4 und I5 sind oder daraus abgeleitet sind und die als Eingangsgrößen dem Rezeptgenerator RG zur Verfügung gestellt werden. Dabei sind die aus der Datenbank DB ausgegebenen Daten D1, D2, D3, D4, D5 zur Weiterverarbeitung mittels eines auf dem Rezeptgenerator RG vorhandenen Regelwerks RW bestimmt.

Der Rezeptgenerator RG umfasst das Regelwerk RW als eigenen Prozessor, der dazu ausgebildet ist, anhand von Regeln, Tabellen, Formeln, Algorithmen, insbesondere statistische Algorithmen, und/oder Datensätzen Rezeptvariablen RV als Ausgangsgrößen des Rezeptgenerators RG zu berechnen. Die Rezeptvariablen RV werden dann als Rezeptdatensatz RD in einem Rezeptspeicher S abgespeichert. Der Rezeptdatensatz RD bildet nun ein allgemeingültiges Rezept, umfassend mehrere vorläufige Prozessdaten, wobei zur Vorbelegung der Steuereinheit 1 weitere spezifische Prozessdaten, wie folgt beschrieben, berücksichtigt werden können, um die Steuereinheit 1 optimal für einen Herstellungsprozess H mit passenden Prozessparametern vorzubelegen, damit diesbezüglich die Verpackungsmaschine 100 den Herstellungsprozess H anfahren kann.

Dafür kann der Rezeptdatensatz RD aus dem Speicher S von der Steuereinheit 1 abgerufen werden. Die Steuereinheit 1 vermittelt den Rezeptdatensatz RD an den vorzugsweise zur Steuereinheit 1 gehörigen Prozessparametergenerator PG, wobei die Steuereinheit 1 ferner dazu konfiguriert ist, spezifische Maschinen-, Verpackungs-, Werkzeug- und/oder Produktdaten SD an den Prozessparametergenerator PG zu senden, welcher mittels eines zu ihm gehörigen herstellungsprozessspezifischen Regelwerks RW' Prozessparameter P als Sollgrößen zur Vorbelegung der Steuereinheit 1 bildet.

Figur 2 zeigt eine Vorrichtung V, umfassend die Verpackungsmaschine 100, die als Tiefziehverpackungsmaschine ausgebildet ist. Die Verpackungsmaschine 100 umfasst eine Abwickelstation 3 für eine Unterfolie U, eine Formstation 4 zum Herstellen von Verpackungsmulden M, die mittels einer Fördereinheit 5 zu einer Siegelstation 6 transportiert werden, und eine weitere Abwickelstation 7 zum Bereitstellen einer Oberfolie O, die in der Siegelstation 6 auf eine bereitgestellte Verpackungsmulde P gesiegelt werden kann. Ferner umfasst die Verpackungsmaschine 100 einen Etikettierer 8 und eine Vereinzelungseinheit 9.

An einem Maschinengestell 11 der Verpackungsmaschine 100 ist eine HMI-Schnittstelle 12 angeordnet. An der HMI-Schnittstelle 11 kann ein Bediener die zuvor in Zusammenhang mit Figur 1 beschriebenen Informationen I auswählen.

Figur 2 zeigt auch, dass die Verpackungsmaschine 100 eine Steuereinheit 1 umfasst. Die Steuereinheit 1 umfasst gemäß Figur 2 den Rezeptgenerator RG, die Datenbank DB, den Prozessparametergenerator PG sowie den Rezeptspeicher RS.

Die Verpackungsmaschine 100 umfasst weiter eine Lesevorrichtung 50, die als RFID-Scanner ausgebildet ist, der dazu konfiguriert ist, die Informationen I zur Generierung der Rezeptvariablen RV aus einem am Produkt, am Verpackungsmaterial, am Werkzeug, am Etikett und/oder am Folienmaterial angebrachten nicht gezeigten RFID-Tag auszulesen und an den Rezeptgenerator RG weiterzuleiten.

Ferner illustriert Figur 2 eine alternative Anwendung, bei welcher ein Rezeptgenerator RG' zusammen mit einem Rezeptspeicher RS' und einer Datenbank DB' örtlich getrennt von der Verpackungsmaschine 100 als separate Einheit ausgebildet sind. Diese kann in dem Server- oder Cloud-System 10, 20 funktional integriert sein, wobei mittels des PC 200 eine Aktivierung des Rezeptgenerators RG' sowie Herstellung der Prozessparameter mittels des Prozessparametergenerators PG' durchgeführt werden kann. Der Rezeptgenerator RG' kann dann die hergestellten Prozessparameter der Steuereinheit 1 übergeben. Vorstellbar ist auch, dass mittels des PC 200 der in der Steuereinheit 1 ausgebildete Rezeptgenerator RG ansteuerbar ist.

## Patentansprüche

1. Vorrichtung (V), umfassend eine Verpackungsmaschine (100), die eine Steuereinheit (1) mit einem Prozessparametergenerator (PG) umfasst, der dazu ausgebildet ist, für einen Herstellungsvorgang (H) der Verpackungsmaschine (100) spezifische Prozessparameter (P) zu bestimmen, wobei die Steuereinheit (1) der Verpackungsmaschine (100) ferner einen Rezeptgenerator (RG) für einen dem Herstellungsvorgang (H) vorangehenden Einstellvorgang (E) der Verpackungsmaschine (100) umfasst oder mit einem als separate Einheit der Vorrichtung ausgebildeten Rezeptgenerator (RG') verbindbar ist, wobei der jeweilige Rezeptgenerator (RG, RG') ein Regelwerk (RW) zur Bestimmung von Rezeptvariablen (RV) für den Einstellvorgang (E) der Verpackungsmaschine (100) umfasst und dazu ausgebildet ist, anhand einer Vielzahl an Informationen (I), einschließlich Informationen (I1, I2, I3, I4, I5) bezüglich eines herzustellenden Produkts, eines Verpackungstyps dafür, mindestens eines eingesetzten Werkzeugs der Verpackungsmaschine, eines aufzubringenden Etiketts und/oder eines Folienmaterials, die Rezeptvariablen (RV) zu erzeugen und daraus einen Rezeptdatensatz (RD) für den Einstellvorgang (E) der Verpackungsmaschine (100) zu bilden, und wobei der Prozessparametergenerator (PG) dazu ausgebildet ist, die Steuereinheit (1) für den Herstellungsvorgang (H) der Verpackungsmaschine (100) mit spezifischen Prozessparametern (P) vorzubelegen, die zumindest teilweise auf den jeweiligen für den Einstellvorgang (E) erzeugten Rezeptvariablen (RV) des Rezeptdatensatzes (RD) basieren,
wobei der Rezeptgenerator (RG, RG') dazu konfiguriert ist, die Rezeptvariablen (RV), ohne in einen prozessnahen Regelkreis des Herstellungsvorgangs (H) eingebunden zu sein, autonom herzustellen, **dadurch gekennzeichnet, dass** der Prozessparametergenerator (PG) dazu ausgebildet ist, die Prozessparameter (P) mittels eines im Prozessparametergenerator (PG) ausgebildeten Regelwerks (RW') in Abhängigkeit von an der Verpackungsmaschine (100) eingesetzten Werkzeugkomponenten anzupassen.

2. Vorrichtung nach Anspruch 1, **dadurch gekennzeichnet, dass** der als separate Einheit ausgebildete Rezeptgenerator (RG') in einem Server- oder Cloud-System (10, 20) funktional integriert ist und für den Einstellvorgang (E) mit dem Prozessparametergenerator (PG) der Steuereinheit (1) der Verpackungsmaschine (100) verbindbar ist.

3. Vorrichtung nach Anspruch 2, **dadurch gekennzeichnet, dass** der als separate Einheit ausgebildete Rezeptgenerator (RG') Zugriff auf eine externe Datenbank (DB') hat, welche das Server- oder Cloud-System (10, 20) umfasst, um darauf abgelegte Informationen (I) für den Rezeptgenerator (RG) abzurufen.

4. Vorrichtung nach einem der vorigen Ansprüche, **dadurch gekennzeichnet, dass** die Steuereinheit (1) der Verpackungsmaschine (100) eine Datenbank (DB) zur Bereitstellung der Informationen (I) und die Verpackungsmaschine (100) eine HMI-Schnittstelle (12) umfasst, woran die Informationen (I) durch einen Bediener für den Rezeptgenerator (RG) der Steuereinheit (1) aufrufbar sind.

5. Vorrichtung nach Anspruch 4, **dadurch gekennzeichnet, dass** die HMI-Schnittstelle (12) der Verpackungsmaschine (100) eine Korrekturfunktion umfasst, anhand welcher durch den Bediener einzelne Rezeptvariablen (RV) und/oder Prozessparameter (P) korrigierbar und/oder ergänzbar sind.

6. Vorrichtung nach einem der vorigen Ansprüche, **dadurch gekennzeichnet, dass** die Verpackungsmaschine (100) eine Lesevorrichtung (50) umfasst, die als RFID-Scanner ausgebildet ist, der dazu konfiguriert ist, die Informationen zur Generierung der Rezeptvariablen (RV) aus einem am Produkt, am Verpackungsmaterial, am Werkzeug, am Etikett und/oder am Folienmaterial angebrachten RFID-Tag auszulesen und an den Rezeptgenerator (RG) weiterzuleiten.

7. Vorrichtung nach einem der vorigen Ansprüche, **dadurch gekennzeichnet, dass** die Steuereinheit (1) der Verpackungsmaschine (100) einen Rezeptspeicher (S) umfasst, auf welchem mehrere für den Einstellvorgang (E) generierte Rezeptdatensätze (RD) ablegbar sind und folgenden Einstellvorgängen (E) zur Verfügung stehen.

8. Vorrichtung nach einem der vorigen Ansprüche, **dadurch gekennzeichnet, dass** das Regelwerk (RW) des Rezeptgenerators (RG, RG') funktional änderbar und/oder erweiterbar ist.

9. Vorrichtung nach einem der vorigen Ansprüche, **dadurch gekennzeichnet, dass** die Verpackungsmaschine (100) eine Tiefziehverpackungsmaschine ist, die eine Formstation (4) umfasst, und der Rezeptgenerator (RG, RG') über eine Regel zur Bestimmung einer Heizzeit als Rezeptvariable (RV) zum Vorheizen einer für den Herstellungsvorgang (H) verwendeten Unterfolie (U) verfügt, wobei der Rezeptgenerator (RG, RG') unter Verwendung der Regel dazu ausgebildet ist, die Heizzeit anhand der Information (I) betreffend eine Foliendicke der Unterfolie zu bestimmen.

10. Vorrichtung nach Anspruch 9, **dadurch gekennzeichnet, dass** der Rezeptgenerator (RG, RG') über eine Regel zur Bestimmung einer Formzeit als Rezeptvariable (RV) zum Formen der Unterfolie (U) verfügt, wobei der Rezeptgenerator (RG, RG') unter Verwendung der Regel dazu ausgebildet ist, die Formzeit als Bruchteil der Heizzeit zu bestimmen.

11. Vorrichtung nach einem der vorigen Ansprüche, **dadurch gekennzeichnet, dass** die Verpackungsmaschine (100) eine Siegelstation (6) umfasst und der Rezeptgenerator (RG, RG') eine Regel zur Bestimmung einer Siegeltemperatur als Rezeptvariable (RV) zum Herstellen einer Siegelnaht umfasst, wobei der Rezeptgenerator (RG, RG') unter Verwendung der Regel dazu ausgebildet ist, die Siegeltemperatur basierend auf einer summierten Foliendicke zu versiegelnder Folienabschnitte zu bestimmen.

12. Vorrichtung nach Anspruch 11, **dadurch gekennzeichnet, dass** der Rezeptgenerator (RG, RG') eine Regel zur Bestimmung einer Siegelkraft als Rezeptvariable (RV) zum Herstellen der Siegelnaht umfasst, wobei der Rezeptgenerator (RG, RG') unter Verwendung der Regel dazu ausgebildet ist, die Siegelkraft als Produkt aus einem an der Siegelstation (6) aufbringbaren Siegeldruck und einer zu erzeugenden Siegelfläche berechnet.

13. Verfahren zur Generierung eines Rezeptdatensatzes (RD) für einen Einstellvorgang (E) einer Verpackungsmaschine (100), wobei ein Rezeptgenerator (RG) der Verpackungsmaschine (100) oder ein als separate Einheit ausgebildeter und mit der Verpackungsmaschine (100) funktional verbindbarer Rezeptgenerator (RG') mittels eines Regelwerks (RW) aus einer Vielzahl an Informationen (I), einschließlich Informationen (I) bezüglich eines herzustellenden Produkts, eines Verpackungstyps dafür, mindestens eines eingesetzten Werkzeugs der Verpackungsmaschine (100), eines aufzubringenden Etiketts und/oder eines Folienmaterials, eine Vielzahl von Rezeptvariablen (RV) des Rezeptdatensatzes (RD) für den Einstellvorgang (E) der Verpackungsmaschine (100) erzeugt, und wobei ein Prozessparametergenerator (PG) der Verpackungsmaschine (100) aus dem Rezeptdatensatz (RD) für den Einstellvorgang (E) der Verpackungsmaschine (100) spezifische Prozessparameter (P) erzeugt, die zumindest teilweise zur Vorbelegung einer Steuereinheit (1) für einen Herstellungsvorgang (H) an der Verpackungsmaschine (100) verwendet werden,
wobei die Herstellung der Rezeptvariablen (RV) mittels des Rezeptgenerators (RG, RG'), ohne in einen prozessnahen Regelkreis des Herstellungsvorgangs (H) eingebunden zu sein, autonom abläuft, **dadurch gekennzeichnet, dass** der Prozessparametergenerator (PG) mit einem im Prozessparametergenerator (PG) ausgebildeten Regelwerk (RW') in Abhängigkeit mindestens einer Rezeptvariablen (RV) des Rezeptdatensatzes (RD) und mindestens einer speziellen Größe einer an der Verpackungsmaschine (100) eingesetzten Werkzeugkomponente einen speziellen Prozessparameter (P) zur Vorbelegung der Steuereinheit (1) berechnet.

## Claims

1. Apparatus (V) comprising a packaging machine (100) which comprises a control unit (1) having a process parameter generator (PG) designed to determine specific process parameters (P) for a production process (H) of the packaging machine (100), wherein the control unit (1) of the packaging machine (100) also comprises a recipe generator (RG) for an adjustment process (E) of the packaging machine (100) preceding the production process (H) or can be connected to a recipe generator (RG') of the apparatus, which generator is designed as a separate unit, wherein the respective recipe generator (RG, RG') comprises a set of rules (RW) for determining recipe variables (RV) for the adjustment process (E) of the packaging machine (100) and is designed to generate the recipe variables (RV) with reference to a plurality of data (I), being with reference to the data (11, 12, 13, 14, 15) relating to the product to be produced, to a packaging type therefor, to at least one used tool of the packaging machine, to a label to be applied and/or to a film material and to form therefrom a recipe data set (RD) for the adjustment process (E) of the packaging machine (100), and wherein the process parameter generator (PG) is designed to pre-allocate the control unit (1) with specific process parameters (P) for the production process (H) of the packaging machine (100) which at least partially are based on the recipe variables (RV) of the recipe data set (RD) respectively generated for the adjustment process (E), wherein the recipe generator (RG) is configured to autonomously determine the recipe variables (RV) without being involved into a process-related control circuit of the production process, **characterized in that** the process parameter generator (PG) is designed to adapt the process parameters (P) by means of a set of rules (RW') formed in the process parameter generator (PG) depending on the tool components used on the packaging machine (100).

2. Apparatus according to claim 1, **characterized in that** the recipe generator (RG') designed as separate unit is functionally integrated in a server or cloud system (10, 20) and can be connected to the process parameter generator (PG) of the control unit (1) of the packaging machine (100) for the adjustment process (E).

3. Apparatus according to claim 2, **characterized in that** the recipe generator (RG') designed as separate unit has access to an external database (DB') which comprises the server or cloud system (10, 20) in order to retrieve data (I) stored therein for the recipe generator (RG).

4. Apparatus according to one of the preceding claims, **characterized in that** the control unit (1) of the packaging machine (100) comprises a database (DB) for providing data (I) and the packaging machine (100) comprises an HMI interface (12) at which the data (I) can be retrieved for the recipe generator (RG) of the control unit (1) by an operator.

5. Apparatus according to claim 4, **characterized in that** the HMI interface (12) of the packaging machine (100) comprises a correction function by means of which individual recipe variables (RV) and/or process parameters (P) can be corrected and/or supplemented by the operator.

6. Apparatus according to one of the preceding claims, **characterized in that** the packaging machine (100) comprises a reading device (50) being designed as RFID scanner which is configured to read the data for generating the recipe variables (RV) from an RFID chip placed on the product, the packaging material, the tool, the label and/or the film material and to pass it on to the recipe generator (RG).

7. Apparatus according to one of the preceding claims, **characterized in that** the control unit (1) of the packaging machine (100) comprises a recipe storage (S) on which several recipe data sets (RD) generated for the adjustment process (E) can be stored and are available for subsequent adjustment processes (E).

8. Apparatus according to one of the preceding claims, **characterized in that** the set of rules (RW) of the recipe generator (RG, RG') is functionally changeable and/or expandable.

9. Apparatus according to one of the preceding claims, **characterized in that** the packaging machine (100) is a deep-drawing packaging machine comprising a molding station (4), and the recipe generator (RG, RG') is provided with a rule for determining a heating time as recipe variable (RV) for preheating a lower film (U) used for the production process (H), wherein the recipe generator (RG) by using the rule is designed to determine the heating time by means of the data (I) concerning the film thickness of the lower film.

10. Apparatus according to claim 9, **characterized in that** the recipe generator (RG) has a rule for determining a molding time as recipe variable (RV) for molding the lower film (U), wherein the recipe generator (RG) by using the rule is designed to determine the molding time as a fraction of the heating time.

11. Apparatus according to one of the preceding claims, **characterized in that** the packaging machine (100) comprises a sealing station (6) and the recipe generator (RG) a rule for determining a sealing temperature as recipe variable (RV) for producing a sealing seam, wherein the recipe generator (RG) by using the rule is designed to determine the sealing temperature based on a summarized film thickness of film sections to be sealed.

12. Apparatus according to claim 11, **characterized in that** the recipe generator (RG) comprises a rule for determining a sealing force as recipe variable (RV) for producing the sealing seam, wherein the recipe generator (RG) by using the rule is designed to calculate the sealing force as a product from a sealing pressure applicable at the sealing station (6) and a sealing surface to be generated.

13. Method for generating a recipe data set (RD) for an adjustment process (E) of a packaging machine (100), wherein a recipe generator (RG) of the packaging machine (100) or a recipe generator (RG) which is designed as separate unit and can be functionally connected to the packaging machine (100) generates a plurality of recipe variables (RV) of the recipe data set (RD) for the adjustment process (E) of the packaging machine (100) by means of rules based on a plurality of data (I) being based on data (I) relating to the product to be produced, to a packaging type therefor, to at least one used tool of the packaging machine, to a label to be applied and/or to a film material, and wherein a process parameter generator (PG) of the packaging machine (100) generates specific process parameter (P) from the recipe data set (RD) for the adjustment process (E) of the packaging machine (100) which at least partially are used for pre-allocating the control unit (1) for a production process (H) on the packaging machine (100), wherein the determination of the recipe variables (RV) takes place by means of the receipt generator (RG) autonomously, without being involved into a process-related control-circuit of the production process, **characterized in that** the process parameter generator (PG) calculates a specific process parameter (P) for pre-allocating the control unit (1) with a set of rules (RW') formed in the process parameter generator (PG) depending on at least one recipe variable (RV) of the recipe data set (RD) and at least one specific value of a tool component used on the packaging machine (100).

## Revendications

1. Dispositif (V) comprenant une machine d'emballage (100) qui comporte une unité de commande (1) avec un générateur de paramètres de traitement (PG), conçu pour déterminer des paramètres de processus spécifiques (P) pour une opération de préparation (H) de la machine d'emballage (100), dans lequel l'unité de commande (1) de la machine d'emballage (100) comprend en outre un générateur de formules (RG) pour une opération de réglage (E) de la machine d'emballage (100) qui précède l'opération de préparation (H), ou peut être connectée à un générateur de formules (RG') conçu comme une unité séparée du dispositif, dans lequel le générateur de formules respectif (RG, RG') comporte un ensemble de règles (RW) pour déterminer des variables de formule (RV) pour l'opération de réglage (E) de la machine d'emballage (100) et est conçu pour générer les variables de formule (RV), sur base d'une pluralité d'informations (I), y compris des informations (11, 12, 13, 14, 15) relatives à un produit à fabriquer, à un type d'emballage pour celui-ci, à au moins un outil utilisé par la machine d'emballage, à une étiquette à appliquer et/ou à un matériau de film, et pour constituer à partir de cela un jeu de données de formule (RD) pour l'opération de réglage (E) de la machine d'emballage (100), et dans lequel le générateur de paramètres de traitement (PG) est conçu pour préconfigurer l'unité de commande (1) pour l'opération de fabrication (H) de la machine d'emballage (100) avec des paramètres de processus spécifiques (P), basés au moins en partie sur les variables de formule (RV) respectives du jeu de données de formule (RD) générées pour l'opération de réglage (E),
dans lequel le générateur de formules (RG, RG') est configuré pour élaborer de manière autonome les variables de formule (RV) sans être intégré dans une boucle de régulation liée au processus de l'opération de fabrication (H),
**caractérisé en ce que** le générateur de paramètres de traitement (PG) est configuré pour adapter les paramètres de processus (P) au moyen d'un ensemble de règles (RW) générées dans le générateur de paramètres de traitement (PG) en fonction de composants d'outillage utilisés par la machine d'emballage (RW).

2. Dispositif selon la revendication 1, **caractérisé en ce que** le générateur de formules (RG') constitué comme une unité séparée est intégré fonctionnellement dans un système de serveurs ou nuagique (10, 20) et peut être connecté au générateur de paramètres de traitement (PG) de l'unité de commande (1) de la machine d'emballage (100) pour l'opération de réglage (E).

3. Dispositif selon la revendication 2, **caractérisé en ce que** le générateur de formules (RG') constitué comme une unité séparée a accès à une base de données externe (DB') qui comporte le système de serveurs ou nuagique (10, 20) pour extraire des informations (I) qui y sont stockées pour le générateur de formules (RG).

4. Dispositif selon l'une des revendications précédentes, **caractérisé en ce que** l'unité de commande (1) de la machine d'emballage (100) comprend une base de données (DB) pour fournir des informations (I), et la machine d'emballage (100) comprend une interface humain-machine (12) où les informations (I) peuvent être appelées par un opérateur pour le générateur de formules (RG) de l'unité de commande (1) .

5. Dispositif selon la revendication 4, **caractérisé en ce que** l'interface humain-machine (12) de la machine d'emballage (100) comprend une fonction de correction au moyen de laquelle des variables de formule (RV) et ou des paramètres de processus (P) individuels peuvent être corrigés et/ou complétés par l'opérateur.

6. Dispositif selon l'une des revendications précédentes, **caractérisé en ce que** la machine d'emballage (100) comporte un dispositif de lecture (50) qui est constitué comme un scanneur de radio-identification, qui est configuré pour lire les informations pour la génération des variables de formule (RV) à partir d'une balise de radio-identification apposée sur le produit, le matériau d'emballage, l'outil, l'étiquette et/ou le matériau de film, et pour les transférer au générateur de formules (RG).

7. Dispositif selon l'une des revendications précédentes, **caractérisé en ce que** l'unité de commande (1) de la machine d'emballage (100) comporte une mémoire de formules (S), dans laquelle sont stockés plusieurs jeux de données de formule (RD) générés pour l'opération de réglage (E) et où des opérations de réglage (E) suivantes sont disponibles.

8. Dispositif selon l'une des revendications précédentes, **caractérisé en ce que** l'ensemble de règles (RW) du générateur de formules (RG, RG') est fonctionnellement modifiable et/ou extensible.

9. Dispositif selon l'une des revendications précédentes, **caractérisé en ce que** la machine d'emballage (100) est une machine d'emballage à emboutissage qui comporte une station de formage (4), et le générateur de formules (RG, RG') dispose d'une règle pour déterminer un temps de chauffe comme variable de formule (RV) pour le préchauffage d'un film inférieur (U) utilisé pour l'opération de préparation (H), dans lequel le générateur de formules (RG, RG'), grâce à l'utilisation de la règle, est constitué pour déterminer le temps de chauffe à partir de l'information (I) concernant une épaisseur de film du film inférieur.

10. Dispositif selon la revendication 9, **caractérisé en ce que** le générateur de formules (RG, RG') dispose d'une règle pour déterminer un temps de formage comme variable de formule (RV) pour la formation du film inférieur (U), dans lequel le générateur de formules (RG, RG'), grâce à l'utilisation de la règle, est constitué pour déterminer le temps de formage comme une fraction du temps de chauffe.

11. Dispositif selon l'une des revendications précédentes, **caractérisé en ce que** la machine d'emballage (100) comporte une station de scellage (6) et le générateur de formules (RG, RG') comporte une règle de détermination de la température de scellage comme variable de formule (RV) pour produire un joint de scellage, dans lequel le générateur de formules (RG, RG'), grâce à l'utilisation de la règle, est constitué pour déterminer la température de scellage sur base d'une épaisseur de film additionnée à la section de film à sceller.

12. Dispositif selon la revendication 11, **caractérisé en ce que** le générateur de formules (RG, RG') comporte une règle pour déterminer la force de scellage comme variable de formule (RV) pour produire le joint de scellage, dans lequel le générateur de formules (RG, RG'), grâce à l'utilisation de la règle, est constitué pour calculer la force de scellage comme produit d'une pression de scellage applicable sur la station de scellage (6) par une surface de scellage à produire.

13. Procédé de génération d'un jeu de données de formule (RD) pour une opération de réglage (E) d'une machine d'emballage (100), dans lequel un générateur de formules (RG) de la machine d'emballage (100) ou un générateur de formules (RG') constitué comme une unité séparée et connectable fonctionnellement à la machine d'emballage (100) génère, au moyen d'un ensemble de règles (RW) à partir d'une pluralité d'informations (I), y compris des informations (I) relatives à un produit à fabriquer, à un type d'emballage correspondant, à au moins un outil utilisé par la machine d'emballage (100), à une étiquette à appliquer et/ou à un matériau de film, une pluralité de variables de formule (RV) du jeu de données de formule (RD) pour l'opération de réglage (E) de la machine d'emballage (100), et dans lequel un générateur de paramètres de traitement (PG) de la machine d'emballage (100) produit des paramètres de processus spécifiques (P) à partir du jeu de données de formule (RD) pour l'opération de réglage (E) de la machine d'emballage (100), qui sont utilisés au moins partiellement pour pré-attribuer une unité de commande (1) pour une opération de préparation (H) à la machine d'emballage (100),
dans lequel la préparation des variables de formule (RV) au moyen du générateur de formules (RG, RG') s'effectue de manière autonome, sans être intégrée dans une boucle de régulation liée au processus de l'opération de préparation (H),
**caractérisé en ce que** le générateur de paramètres de traitement (PG), avec un ensemble de règles (RW) constitué par le générateur de paramètres de traitement (PG) en fonction d'au moins une variable de formule (RV) du jeu de données de formule (RD) et d'au moins une taille spéciale d'un des composants d'outil utilisés sur la machine d'emballage (100), calcule un paramètre de processus spécial (P) pour la pré-attribution de l'unité de commande (1) .
